# EUROPÄISCHE PATENTSCHRIFT

(11) **EP 2 598 766 B1**
(45) Veröffentlichungstag und Bekanntmachung des Hinweises auf die Patenterteilung: **07.09.2016**
(21) Anmeldenummer: 11736105.5
(22) Anmeldetag: 27.07.2011
(51) Int. Cl.: F16D 65/14, H02K 49/04, F16D 55/224, B60T 13/74, B61H 5/00

(54) **BREMSVORRICHTUNG MIT EINEM DIE BREMSSCHEIBE EINER REIBUNGSSCHEIBENBREMSE BILDENDEN ROTOR EINER WIRBELSTROMSCHEIBENBREMSE**
BRAKE DEVICE COMPRISING A ROTOR OF AN EDDY CURRENT DISK BRAKE, THE ROTOR FORMING THE BRAKE DISK OF A FRICTION DISK BRAKE
DISPOSITIF DE FREINAGE COMPORTANT UN ROTOR D'UN FREIN À DISQUE À COURANTS DE FOUCAULT FORMANT LE DISQUE DE FREIN D'UN FREIN À DISQUE À FRICTION

(30) Priorität: 28.07.2010 DE 102010032516
(43) Veröffentlichungstag der Anmeldung: 05.06.2013
(73) Patentinhaber: KNORR-BREMSE Systeme für Schienenfahrzeuge GmbH, 80809 München (DE)
(72) Erfinder: WALTER, Manfred, 85375 Neufahrn (DE); VAN DE LOECHT, Miriam, 81373 München (DE)
(74) Vertreter: Mattusch, Gundula
(86) Internationale Anmeldenummer: PCT/EP2011/062902
(87) Internationale Veröffentlichungsnummer: WO 2012/013703

(56) Entgegenhaltungen:
- EP-A1- 0 677 675
- WO-A1-02/49901
- WO-A1-2007/053889
- DE-A1- 2 213 050

## Beschreibung

Die Erfindung betrifft eine Bremsvorrichtung einer Fahrzeugs gemäß dem Oberbegriff von Anspruch 1.

Bei Reibungsscheibenbremsen werden derzeit im Schienenfahrzeugbereich drei Radbremssysteme eingesetzt: Pneumatische oder elektro-pneumatische Bremssysteme, hydraulische oder elektro-hydraulische Bremssysteme sowie mechanische oder elektro-mechanische Bremssysteme. Das Reibungsscheibenbremssystem kann dabei als aktives oder passives Bremssystem ausgeführt sein, je nachdem ob die Kraft des Bremsaktuators zum Einbremsen (aktives Bremssystem) oder zum Lösen der Bremse (passives Bremssystem) aufgebracht werden muss. Für den Fall von Betriebsstörungen erfolgt bei pneumatischen Systemen eine Energiespeicherung in Druckluftbehältern, bei hydraulischen Systemen in Hydrobehältern und bei elektro-mechanischen Systemen in Form von Speicherfedern.

Aus dem Stand der Technik, beispielsweise aus der WO 02/49901 A1 sind elektro-mechanische Reibungsscheibenbremsen für Schienenfahrzeuge bekannt, welche eine Betriebsbremseinheit sowie eine Speicherbremseinheit mit einem Energiespeicher aufweisen. Die Betriebsbremseinheit beinhaltet einen Bremskrafterzeuger oder Bremsaktuator zum Zuspannen und/oder Lösen der Bremse, beispielsweise in Form eines elektromotorischen Antriebs. Die Speicherbremseinheit umfasst mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im Allgemeinen als Federspeicherbremse ausgebildet. Ein Kraftumsetzer sorgt für eine Umsetzung der vom Bremskrafterzeuger und/oder vom Energiespeicher abgegebenen Energie in eine Bremszuspannbewegung und umfasst beispielsweise eine vom elektromotorischen Antrieb getriebene Bremsspindel. Bei Auslösung der Federspeicherbremse im Park- oder Notbremsfall wird die in der Speicherfeder gespeicherte potentielle Energie freigesetzt und in eine hohe kinetische Energie der Elemente des Kraftumsetzers umgewandelt.

Bei dieser Reibungsscheibenbremse, die in der Regel ergänzend zu elektro-und hydro-dynamischen Bremsen an Trieb- und Laufachsen von Schienenfahrzeugen verwendet wird, entsteht die Bremswirkung durch Reibung zwischen den Bremsbelägen und der Bremsscheibe. Nachteilig bei solchen Reibungsscheibenbremsen ist der der Bremsbelagverschleiß und der dabei entstehende Bremsenabrieb. Zudem können Risse aufgrund von lokalen Spannungen entstehen. Diese lokalen Spannungen, Hot Spots genannt, werden durch unebene Oberflächen von Bremsbelägen und Bremsscheibe hervorgerufen, wodurch die Bremsbeläge punktuell auf die Bremsscheibe wirken und die Wärme- bzw. Bremsenergie inhomogen in die Bremsscheibe eingebracht wird.

Aus der DE-A-2 213 050 ist eine Bremsvorrichtung bekannt, bei welcher eine Reibungsbremse und eine Wirbelstromscheibenbremse als elektrodynamische Bremse separat ausgebildet und in einem Schienenfahrzeug angeordnet sind, wobei beide Bremsarten gemeinsam zum Abbremsen des Schienenfahrzeugs eingesetzt werden können. Dies wird "Bremsenbiending" genannt.

In den meisten Fällen wird der die magnetischen Kraftlinien erzeugende Teil der Wirbelstromscheibenbremse an feststehenden Teilen des Fahrzeugs, z.B. bei Schienenfahrzeugen am Drehgestell und die Wirbelstrombremsscheibe auf abzubremsenden Teilen wie beispielsweise an einer Achse angebracht.

Dabei wird, soweit wie möglich mit der kraftschlussunabhängigen Wirbelstromscheibenbremse als Betriebsbremse gebremst, da diese annährend verschleißfrei ist. Solche Wirbelstromscheibenbremsen sind in der Regel in den Antrieben integriert, wodurch sie nur auf angetriebene Achsen wirken. Nachteilig dabei ist, dass ihre Bremsleistung geschwindigkeitsabhängig ist, insbesondere nimmt das Bremsmoment mit sinkender Drehgeschwindigkeit des Rotors ab, weshalb sie nicht für Bremsungen bis zum Stillstand eingesetzt werden können und ein abgestelltes Schienenfahrzeug nicht in seiner eingebremsten Lage halten können. Zudem sind bei zusätzlich zu Reibungsbremsen eingesetzten elektrodynamischen Wirbelstromscheibenbremsen deren hohes Zusatzgewicht und deren zusätzlich beanspruchter Bauraum vor allem in räumlich beengten Drehgestellen von Schienenfahrzeugen von Nachteil.

Eine gattungsbildende Bremsvorrichtung ist aus EP 0 677 675 A1 bekannt. Bei dieser Bremsvorrichtung erfolgt eine Betätigung einer Druckluftbremse als Reibungsbremse und einer Wirbelstrom-Bremseinrichtung über das Bremspedal, wobei bei einer geringen Betätigung des Bremspedals zunächst die Wirbelstrom-Bremseinrichtung in Abhängigkeit von der Bremspedalstellung eingeschaltet und anschließend die Druckluftbremse betätigt wird, wenn noch eine stärkere Verzögerung erforderlich ist.

Der Erfindung liegt demgegenüber die Aufgabe zugrunde, eine Bremsvorrichtung der eingangs erwähnten Art derart fortzubilden, dass die Wirkung der Wirbelstromscheibenbremse besser ausgenutzt wird.

### Offenbarung der Erfindung

Die Erfindung geht davon aus, dass der Rotor der Wirbelstromscheibenbremse als rotierende Wirbelstrombremse durch die Bremsscheibe der Reibungsscheibenbremse gebildet wird. Die Wirbelstrombremsscheibe und die Reibungsbremsscheibe werden daher durch ein einziges Bauteil ausgebildet.

Demzufolge wird durch eine solche Bremsscheibe eine Vereinigung zweier Funktionen in einem Bauteil verwirklicht, als sie einerseits als Reibpartner der Bremsbeläge der Reibungsscheibenbremse, andererseits aber auch gleichzeitig als Rotor der Wirbelstromscheibenbremse dient. Als zusätzliche Komponente zur Realisierung einer Wirbelstromscheibenbremse muss lediglich ein mit der im Rahmen der Reibungsscheibenbremse ohnehin bereits vorhandenen Bremsscheibe zusammenwirkender Stator vorgesehen werden, der vorzugsweise die die magnetischen Kraftlinien erzeugende Einheit wie beispielsweise Elektromagneten trägt.

Dadurch wird die Anzahl der in beiden Bremsarten verwendeten Bauteile vorteilhaft reduziert, mithin sinkt auch das Gewicht der Bremsvorrichtung, was im Hinblick auf den beengten Bauraum im Bereich von Schienenfahrzeugdrehgestellen und die ungefederten Massen von Vorteil ist. Nicht zuletzt wird durch die kompakte Bauweise der Bremsvorrichtung dessen Montage im Drehgestell erleichtert.

Mit anderen Worten wird eine Reibungsscheibenbremse mit integrierter Federspeicherbremse und eine steuer- bzw. regelbare Wirbelstromscheibenbremse zur zeitlich hintereinander und/oder zeitlich parallelen Erzeugung eines angeforderten Betriebsbremsmoments sowie zur Erzeugung eines Feststellbremsmoments durch die Federspeicherbremse gegen Wegrollen des abgestellten Fahrzeugs kombiniert.

Die Reibungsscheibenbremse überträgt bevorzugt mittels einer Bremszange, Bremsbelaghaltern und Bremsbelägen die Bremskraft auf eine Reibfläche der Bremsscheibe. Mit der in die Reibungsscheibenbremse integrierten Federspeicherbremse, die beispielsweise bei Entlüften eine dauerhafte mechanische Federkraft auf die Bremszange erzeugt, ist die Feststellbremse realisierbar.

Die Bremsvorrichtung kann für Trieb- oder Laufachsen eingesetzt werden, wodurch es auf einfache Weise möglich wird, auch Laufachsen verschleißfrei abzubremsen und dadurch den Belagverschleiß an den Laufachsen zu reduzieren.

Die Magnetanordnung beinhaltet wenigstens einen Elektromagneten. Bei Erregung des wenigstens einen Elektromagneten wird in bekannter Weise ein Magnetfeld erzeugt, dessen magnetische Feldlinien bei relativer Bewegung der Bremsscheibe als Rotor gegenüber dem Elektromagneten als Stator in der vorzugsweise an oder in der Bremsscheibe ausgebildeten Wirbelstrombahn Wirbelströme induzieren, die ein Bremsmoment auf die Bremsscheibe ausüben.

Der wenigstens eine Elektromagnet wird von einer Steuereinheit in Abhängigkeit von Betriebsparametern des Fahrzeugs angesteuert.

Erfindungsgemäß beinhalten die Betriebsparameter des Fahrzeugs die jeweilige Bremsanforderung und die Geschwindigkeit des Fahrzeugs.

Durch die in den Unteransprüchen aufgeführten Maßnahmen sind vorteilhafte Weiterbildungen und Verbesserungen der in Anspruch 1 angegebenen Erfindung möglich.

Die Steuereinheit ist zur weiteren Bauraumersparnis in eine Bremssteuereinheit integriert, welche auch die Steuerung der Reibungsscheibenbremse umfasst.

Die Reibungsscheibenbremse ist bevorzugt eine kombinierte Betriebs- und Feststellbremse, wobei ein Bremsaktuator der Betriebsbremse mit einem Bremsaktuator der Feststellbremse in einer Baueinheit, vorzugsweise in einer Bremszangeneinheit zusammengefasst ist. Dabei ist der Bremsaktuator der Betriebsbremse der Reibungsscheibenbremse beispielsweise elektrisch und/oder pneumatisch betätigbar und dass der Bremsaktuator der Feststellbremse der Reibungsscheibenbremse beinhaltet einen die Zuspannkraft abgebenden Federspeicher. Im Rahmen der Bremszangeneinheit wirken dann der Bremsaktuator der Betriebsbremse der Reibungsscheibenbremse und der Bremsaktuator der Feststellbremse der Reibungsscheibenbremse auf eine gemeinsame Bremszange, welche endseitig die Bremsbeläge der Reibungsscheibenbremse trägt.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt
- Fig.1: eine Schnittdarstellung einer bevorzugten Ausführungsform einer Bremszangeneinheit einer Reibungsscheibenbremse in Lösestellung;
- Fig.2: einen vergrößerte Ausschnitt von Fig. 1;
- Fig.3: eine stark schematisierte Darstellung einer Bremsvorrichtung gemäß einer bevorzugten Ausführungsform der Erfindung mit einer Wirbelstromscheibenbremse und einer Reibungsscheibenbremse gemäß Fig.1.

### Beschreibung des Ausführungsbeispiels

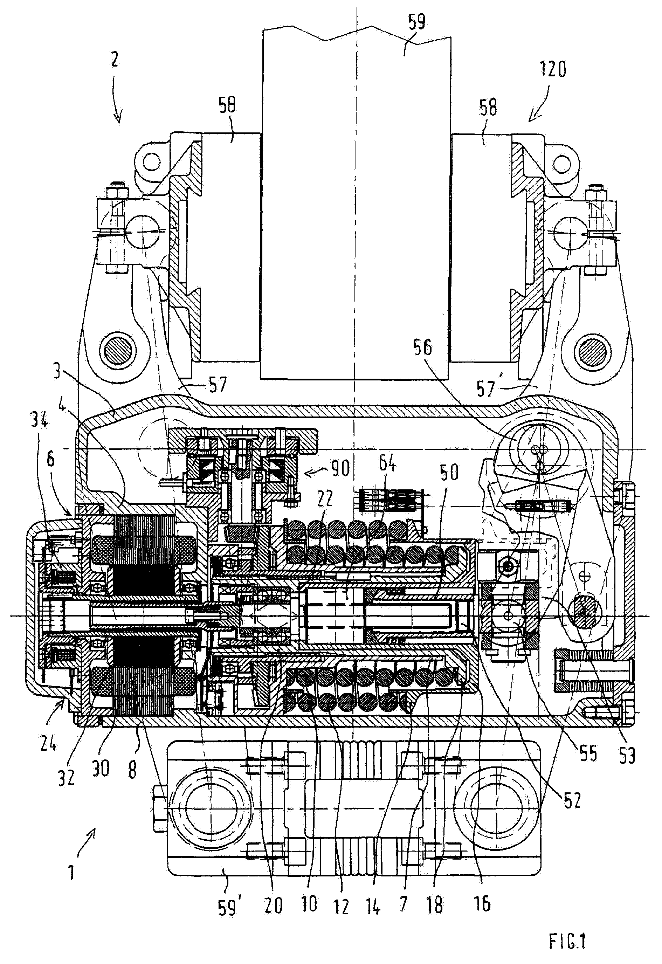

Der in Fig.1 mit 1 bezeichnete und in einer Lösestellung gezeigte Bremsaktuator 1 dient als Antriebseinheit einer beispielsweise elektromechanischen Reibungsscheibenbremse 2 eines Schienenfahrzeugs. Der Bremsaktuator 1 hat ein im Wesentlichen hohlzylindrisches Aktuatorgehäuse 3, das zu einem axialen Ende hin von einem Deckelabschnitt 4 abgeschlossen wird, welcher eine endseitige Öffnung 6 aufweist. Ausgehend vom Deckelabschnitt 4 ist das Aktuatorgehäuse 3 im wesentlichen doppelwandig ausgebildet, wobei in dem Raum zwischen einer inneren Wandung 7 und einer äußeren Wandung 8 eine innere Speicherfeder 10 und eine hierzu koaxiale äußere Speicherfeder 12 angeordnet sind, wobei die äußere Speicherfeder 12 die innere Speicherfeder 10 umschließt.

Die Speicherfedern 10, 12 sind vorzugsweise als Schraubenfedern ausgebildet und stützen sich jeweils mit ihrem einen Ende am Aktuatorgehäuse 3 ab. Die äußere Speicherfeder 12 stützt sich mit ihrem anderen Ende auf einem Ringkragen 14 einer äußeren Schiebehülse 16, die innere Speicherfeder 10 mit ihrem anderen Ende auf einem Ringkragen 18 einer inneren Schiebehülse 20 ab, wobei die innere Schiebehülse 20 der äußeren Schiebehülse 16 und der inneren Wandung 7 des Aktuatorgehäuses 3 zwischengeordnet ist. Ferner sind die innere und die äußere Schiebehülse 16, 20 in axialer Richtung aneinander und die innere Schiebehülse 20 an einer radial inneren Umfangsfläche der inneren Wandung 7 des Aktuatorgehäuses 3 verschieblich geführt, wobei die äußere Schiebehülse 16 in der Lösestellung an einem axialen Anschlag 22 der inneren Schiebehülse 20 zur Anlage kommt. Ferner überragt der Ringkragen 14 der äußeren Schiebehülse 16 den Ringkragen 18 der inneren Schiebehülse 20 in axialer und radialer Richtung.

Im Deckelabschnitt 4 ist an der von den Speicherfedern 10, 12 abgewandten Seite ein im Vierquadrantenbetrieb betreibbarer SR-Motor 24 (switched reluctance motor) aufgenommen. Der SR-Motor 24 beinhaltet einen radial äußeren, gehäusefesten Stator 30, welcher einen Rotor 32 umschließt, der mittels einer Haltebremse 34, vorzugsweise einer Permanentmagnetbremse abbremsbar ist, welche stromlos geschlossen und bestromt geöffnet ist.

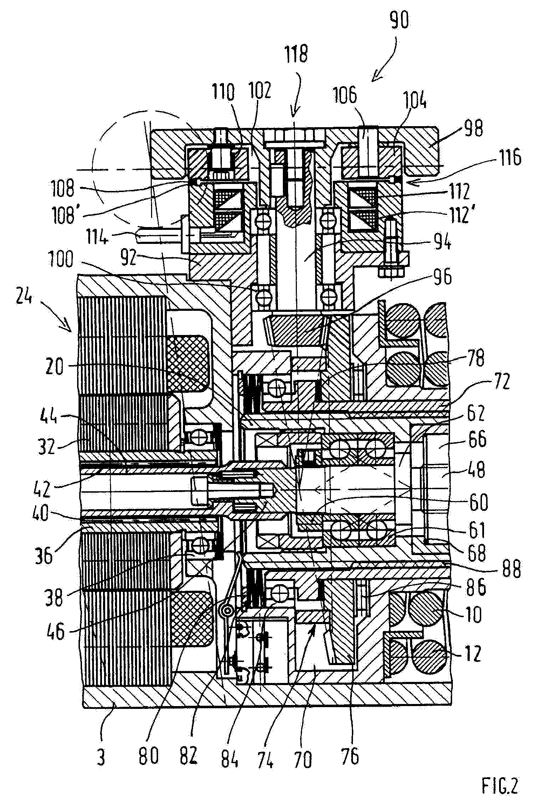

Wie am besten anhand von Fig.2 zu sehen ist, sitzt der Rotor 32 auf einer Hohlwelle 36, die über Kugellager 38 im Aktuatorgehäuse 3 drehbar gelagert und an ihrer radial inneren Umfangsfläche mit einer axial verlaufenden Keilwellenverzahnung 40 versehen ist, in welche radial äußere und in Axialrichtung verlaufende Flügel 42 einer Zwischenhülse 44 eingreifen. Infolgedessen ist die Zwischenhülse 44 relativ zur Hohlwelle 36 unverdrehbar aber axial verschieblich geführt.

Ein endseitiger Zapfen 46 einer Bremsspindel 48 ragt koaxial in ein den Speicherfedern 10, 12 zugewandtes Ende der Zwischenhülse 44 und ist dort dreh- und axialfest gehalten. Das andere Ende der Bremsspindel 48 ragt in einen becherförmigen Abschnitt 50 eines Pleuels 52 für einen Exzenterhebel 53 hinein, wie Fig.1 zeigt. Der becherförmige Abschnitt 50 des Pleuels 52 ist in der äußeren Schiebehülse 16 axialfest gehalten, kann aber durch eine Kugelkalotte seitlich ausschwenken. An die von den Speicherfedern 10, 12 abgewandte Stirnseite des Pleuels 52 ist ein Auge angeformt, in das ein Bolzen 55 eingreift, welcher mit einem Ende des Exzenterhebels 53 einer Exzenteranordnung verbunden ist. Die Exzenteranordnung weist eine Exzenterwelle 56 auf, die an einen Zangenhebel 57 angelenkt ist, der zusammen mit einem weiteren Zangenhebel 57' eine Bremszange bildet. An den einen Enden der Zangenhebel 57, 57' sind jeweils Belaghalter mit Bremsbelägen 58 angeordnet, die in Richtung der Achse einer Bremsscheibe 59 verschieblich sind. Die von den Bremsbelägen 58 abgewandt liegenden Enden der Zangenhebel 57, 57' sind miteinander über einen Druckstangensteller 59' verbunden, der vorzugsweise elektrisch betätigt ausgelegt ist.

Wie aus Fig.2 hervorgeht, ist die Bremsspindel 48 innerhalb der inneren Schiebehülse 20 drehbar gelagert, vorzugsweise mittels eines zweireihigen Rillenkugellagers 61, welches sowohl Axial- als auch Radialkräfte aufnehmen kann und von welchem ein Innenring durch eine auf einen Außengewindeabschnitt der Bremsspindel 48 aufgeschraubte Mutter 60 gegen eine Schulter 62 der Bremsspindel 48 gespannt und dadurch an der Bremsspindel 48 dreh- und axialfest gehalten wird. Ein Außenring des Rillenkugellagers 61 ist in der inneren Schiebehülse 20 ebenfalls dreh- und axialfest gehalten.

Die Bremsspindel 48 ist von einer Mutter/Spindelbaueinheit 64 umfasst, die vorzugsweise als Wälzegewindetrieb wie beispielsweise Kugelumlaufspindel, Rollengewindetrieb, Gewinderollenschraubtrieb oder als Planeten-Wälzgewindetrieb ausgebildet sein kann. Der becherförmige Abschnitt 50 des Pleuels 52 ist dabei in die äußere Schiebehülse 16 soweit eingesetzt, dass die Mutter 66 der Mutter/Spindelbaueinheit 64 zwischen einem radial inneren Ansatz 68 der äußeren Schiebehülse 16 und einer Stirnfläche des becherförmigen Abschnitts 50 des Pleuels 52 eingespannt ist, so dass sie diesem gegenüber verdrehsicher gehalten ist. Bei Drehungen der Bremsspindel 48 wird daher die Mutter 66 entlang der Bremsspindel 48 translatorisch geführt und nimmt dabei die äußere Schiebehülse 16 und den Pleuel 52 mit.

Im Deckelabschnitt 4 des Aktuatorgehäuses 2 ist ein Ringraum 70 ausgebildet, in welchem ein mit einer Verriegelungsmutter 72 durch eine Rutschkupplung 74 in treibender Verbindung stehendes Tellerrad 76 koaxial zur Bremsspindel 48 aufgenommen ist. Das Tellerrad 76 sitzt auf der radial äußeren

Umfangsfläche der Verriegelungsmutter 72 und ist mit dieser durch die Rutschkupplung 74 bis zu einem oberen Grenzdrehmoment drehfest verbunden. Die Rutschkupplung 74 wird vorzugsweise durch axial ineinander greifende Stirnverzahnungen 78 am Tellerrad 76 und an der Verriegelungsmutter 72 gebildet, wobei ein sich am Aktuatorgehäuse 3 durch einen Sprengring 80 axial abstützendes Tellerfederpaket 82, welches auf ein radiales Rillenkugellager 84 wirkt, das die Verriegelungsmutter 72 relativ zum Aktuatorgehäuse 3 lagert, die für einen Kraft- und Formschluss der Stirnverzahnungen 78 notwendige Axialkraft bereitstellt. Das Tellerrad 76 ist an seiner von den Stirnverzahnungen 78 weg weisenden Seite durch ein Axialnadellager 86 gegenüber dem Aktuatorgehäuse 3 axial gelagert. Die Verriegelungsmutter 72 umschließt die innere Schiebehülse 20 und ist auf dieser mittels eines nicht-selbsthemmenden Gewindes 88 drehbar gelagert.

Eine vorzugsweise elektro-magnetisch betätigbare Verriegelungsvorrichtung 90 hat ein Gehäuse 92, das an einer radialen Öffnung des Ringraumes 70 angeflanscht ist. Die Verriegelungsvorrichtung 90 umfaßt eine Welle 94, an deren radial innerem Ende ein Kegelrad 96 und an deren gegenüberliegenden, radial äußeren Ende eine zylindrische Schwungscheibe 98 angeordnet ist. Das Kegelrad 96 kämmt mit der Verzahnung des Tellerrades 76 und bildet mit diesem ein Kegelradgetriebe, welches vorzugsweise ein relativ hohes Übersetzungsverhältnis aufweist, welches beispielsweise in einem Bereich von 3,0 bis 8,0 liegt. Die Welle 94 ist im Gehäuse 92 der Verriegelungsvorrichtung 90 durch Rillenkugellager 100 drehbar gelagert, wobei die Welle 94 senkrecht zur Bremsspindel 48 angeordnet ist.

Die Schwungscheibe 98 hat an ihrer zur Bremsspindel 48 weisenden Stirnfläche eine Ringausnehmung 102 für einen Ring 104, der koaxial zur Welle 94 angeordnet und entlang sich in axialer Richtung erstreckenden Zapfen 106 verschieblich aufgenommen ist, wodurch er mit der Schwungscheibe 98 drehfest verbunden ist. Der Ring 104 weist außerdem an seiner von der Schwungscheibe 98 weg weisenden Stirnfläche einen radial äußeren Zahnkranz 108 auf, welcher einem weiteren, sich am Gehäuse 92 der Verriegelungsvorrichtung 90 abstützenden Zahnkranz 108' gegenüberliegt und durch die Wirkung von Druckfedern 110 von diesem weg gedrängt ist. Dem Ring 104 liegen im weiteren zwei im Gehäuse 92 der Verriegelungsvorrichtung 90 in Axialrichtung hintereinander angeordnete Magnetspulen 112, 112' gegenüber, welche durch einen elektrischen Anschluss 114 bestrombar sind. Der Ring 104, die beiden Zahnkränze 108, 108' und die beiden Magnetspulen 112, 112' bilden zusammen eine Magnetzahnbremse 116.

Bei bestromten Magnetspulen 112, 122' entstehen magnetische Anziehungskräfte, die den Ring 104 gegen die Wirkung der Druckfedern 110 entlang der Zapfen 106 in axialer Richtung auf die Magnetspulen 112, 112' zu bewegen, wodurch der Zahnkranz 108 des Ringes 104 mit dem am Gehäuse 92 der Verriegelungsvorrichtung 90 gehaltenen Zahnkranz 108' in Eingriff kommt und somit eine drehfeste Verbindung mit diesem eingeht. Dann kann ein über das Tellerrad 76 in die Verriegelungsvorrichtung 90 eingeleitetes Drehmoment am Gehäuse 92 der Verriegelungsvorrichtung 90 abgestützt werden, wobei der Kraftfluss durch das Kegelrad 96, die Welle 94 und die Schwungsscheibe 98 läuft.

In Lösestellung der Magnetzahnbremse 116 sind die Magnetspulen 112, 112' dagegen unbestromt, so dass der Zahnkranz 108 des Ringes 104 durch die Wirkung der Druckfedern 110 mit dem am Gehäuse 92 der Verriegelungsvorrichtung 90 gehaltenen Zahnkranz 108' außer Eingriff kommt und infolgedessen sich das Tellerrad 76 zusammen mit dem Kegelrad 96, der Welle 94 und der Schwungscheibe 98 gegenüber dem Gehäuse 92 der Verriegelungsvorrichtung 90 frei drehen kann. Die Schwungscheibe 98, der Ring 104, die Welle 94 und das Kegelrad 96 bilden dann zusammen eine senkrecht zur Bremsspindel 48 oder zur Bremszuspannrichtung drehbare und bezogen auf die Rutschkupplung 74 jenseits der Verriegelungsmutter 72 angeordnete Schwungmasse 118, wobei der Anteil der Schwungscheibe 98 am Massenträgheitsmoment der Schwungmasse 118 aufgrund Ihres Radius am größten ist.

Der SR-Motor 24 bildet einen Bremskrafterzeuger, die weiteren Elemente des Kraftübertragungsweges vom SR-Motor 24 bis zu den Zangenhebeln 57, 57' einen Bremskraftumsetzer 120. Besonders bevorzugt wird als Bremskrafterzeuger ein Elektromotor 24 eingesetzt. Alternativ könnte der Bremskrafterzeuger aber auch ein in eine oder zwei Betätigungsrichtungen wirkender hydraulischer oder pneumatischer Bremszylinder sein oder eine andere in eine oder zwei Richtungen wirkende Einheit. Die Verriegelungsvorichtung 90, die Permanentmagnetbremse 34 und der SR-Motor 24 sind von einer nicht dargestellten elektronischen Steuer- und Regeleinrichtung ansteuerbar. Vor diesem Hintergrund hat der Bremsaktuator 1 bzw. die Reibungsscheibenbremse 2 folgende Funktion :
In der in Fig.1 gezeigten Lösestellung des Bremsaktuators 1 sind die äußere und die innere Speicherfeder 10, 12 vorgespannt. Die Kraft der inneren Speicherfeder 10 wird von der inneren Schiebehülse 20 über das nichtselbsthemmende Gewinde 88 auf die Verriegelungsmutter 72 und von dort über die Rutschkupplung 74 auf das Tellerrad 76 und die Schwungscheibe 98 übertragen. Infolge der Federkraft der inneren Speicherfeder 10 wird in dem nicht-selbsthemmenden Gewinde 88 ein Drehmoment erzeugt, d.h. die Verriegelungsmutter 72 möchte sich zusammen mit der Schwungmasse 118 drehen, was aber durch die bestromte und damit geschlossene Magnetzahnbremse 116 verhindert wird.

Die Kraft der äußeren Speicherfeder 12 wird von der äußeren Schiebehülse 16 an der Mutter 66 der Mutter/Spindelbaueinheit 64 abgestützt, obwohl die Mutter/Spindelbaueinheit 64 nicht-selbsthemmend ist. Denn das infolge der Kraft der äußeren Speicherfeder 12 in der Bremsspindel 48 entstehende Drehmoment wird über die in Lösestellung geschlossene Permanentmagnetbremse 34 in das Aktuatorgehäuse 3 eingeleitet. Von der Mutter 66 läuft der Kraftfluss über die Bremsspindel 48 und das zweireihige Rillenkugellager 61 in die innere Schiebehülse 20 und nimmt von dort aus den gleichen Weg in das Tellerrad 76 wie die Kraft der inneren Speicherfeder 10. Das bedeutet, dass in Lösestellung sowohl die äußere wie auch die innere Speicherfeder 10, 12 von der Verriegelungsvorrichtung 90 in gespanntem Zustand gehalten werden.

Beim Übergang von der Lösestellung zur einer Betriebsbremsung wird die Permanentmagnetbremse 34 durch die elektronische Steuer- und Regeleinrichtung bestromt, dadurch öffnet die Bremse 34 und ermöglicht eine Drehung des SR-Motors 24, welcher von der Steuer- und Regeleinrichtung ebenfalls mit elektrischer Energie versorgt wird. Durch die Drehung des Rotors 32 und der Bremsspindel 48 wird die Mutter 66 der Mutter/Spindelbaueinheit 64 zusammen mit der äußeren Schiebehülse 16 und dem Pleuel 52 in Betriebsbremsstellung ausgefahren. Diese Ausfahrbewegung des Pleuels 52 wird von der äußeren Speicherfeder 12 unterstützt, welche funktionsbezogen dem SR-Motor 24 parallel geschaltet ist.

Die Ansteuerung des SR-Motors 24 durch die Steuer- und Regeleinrichtung und die äußere Speicherfeder 12 sind dabei derart aufeinander abgestimmt, dass die äußere Speicherfeder 12 alleine einen definierten Bremskraftwert erzeugt, welcher zwischen einer minimalen und einer maximalen Bremskraft liegt und einen Betriebsnullpunkt definiert. Der SR-Motor 24 ist im Betriebsnullpunkt stromlos geschaltet. Die Größe der im Betriebsnullpunkt wirkenden Bremskraft ist daher unter anderem abhängig von der Federrate der äußeren Speicherfeder 12 und dem Grad der Vorspannung. Zum Erreichen der maximalen Bremskraft wird der SR-Motor 24 durch die Steuer- und Regeleinrichtung im Vierquadrantenbetrieb so gesteuert, dass er die äußere Speicherfeder 12 durch Drehen in Bremszuspannrichtung und durch Abgabe eines positiven Bremsmoments unterstützt, was beispielsweise einem Betrieb im ersten Quadranten entspricht. Zum Erreichen einer Bremskraft kleiner als im Betriebsnullpunkt dreht der SR-Motor 24 zwar in Bremszuspannrichtung, liefert jedoch ähnlich einem Generator ein negatives Drehmoment, welches über die Mutter/Spindelbaueinheit 64 gegen die äußere Speicherfeder 12 wirkt (Betrieb im zweiten Quadranten). Die innere Speicherfeder 10 ist bei der Erzeugung der Betriebsbremskraft nicht beteiligt und verbleibt in gespanntem Zustand, da die Verriegelungsmutter 72 durch die weiterhin bestromte Magnetzahnbremse 116 arretiert ist.

Das geregelte Einlegen der Feststell- oder Parkbremse wird eingeleitet durch die oben beschriebene Betriebsbremsung bis zum Erreichen einer Bremskraft, die etwa 20% geringer ist als die mit der Feststellbremse zu erzielende Endkraft. Durch entsprechende Steuersignale der Steuereinrichtung wird der SR-Motor 24 stillgelegt, die Permanentmagnetbremse 34 durch Unterbrechung der Stromzufuhr geschlossen und die Magnetzahnbremse 116 durch Abschalten der Bestromung gelöst. Aufgrund der auf die innere Schiebehülse 20 wirkenden, von der inneren Speicherfeder 10 erzeugten Federkraft wird in dem nicht-selbsthemmenden Trapezgewinde 88 zwischen der Verriegelungsmutter 72 und der inneren Schiebehülse 20 ein Drehmoment erzeugt, welches von der nun frei drehbaren Schwungmasse 118 nicht mehr abgestützt wird. Folglich beginnt die Verriegelungsmutter 72 auf der inneren Schiebehülse 20 zu rotieren, welche sich daraufhin in Bremszuspannrichtung bewegt und über ihren axialen Anschlag 22 die äußere Schiebehülse 16 mit dem Pleuel 52 mitnimmt. Gleichzeitig kann sich die entriegelte äußere Schiebehülse 16 aufgrund der Federkraft der äußeren Speicherfeder 12 in Bremszuspannrichtung bewegen. Dabei ist unerheblich, ob die Permanentmagnetbremse 34 geöffnet oder geschlossen ist, da sich die Zwischenhülse 44 zusammen mit der Bremsspindel 48 bei diesem Vorgang in der Keilwellenverzahnung 40 der Hohlwelle 36 des Rotors 32 axial verschiebt. In der Feststellbremsstellung wirkt daher eine Gesamtbremskraft, welche sich aus der Summe der Federkräfte der beiden parallel wirkenden Speicherfedern 10, 12 ergibt.

Während der Bremszuspannbewegung wird die Rotation der Verriegelungsmutter 72 über das Kegelradgetriebe 76, 96 in eine mit höherer Drehzahl stattfindende Drehung der Schwungmasse 118 übersetzt, so dass ein großer Teil der potentiellen Energie der sich entspannenden Speicherfedern 10, 12 in Rotationsenergie umgewandelt wird. Wenn die Bremsstellung erreicht ist, kann die gesamte Energieversorgung abgeschaltet werden und das Schienenfahrzeug ist durch die Federkräfte der inneren und äußeren Speicherfeder 10, 12 zuverlässig in Feststellbremsstellung gehalten. Um die dadurch erzielte Feststellbremskraft über einen längeren Zeitraum aufrecht zu erhalten, darf bei der inneren und der äußeren Speicherfeder 10, 12 nur geringe Relaxation zugelassen werden. Vorzugsweise bestehen beide Speicherfedern 10, 12 aus hochfestem Siliziumfederdraht CrSiVa TH-381 HRA der Fa. Trefileurope.

Mit Erreichen der Bremsstellung stoppt die Rotation der Verriegelungsmutter 72. Die Rutschkupplung 74 zwischen Verriegelungsmutter 72 und Tellerrad 76 ist derart ausgelegt, dass das obere Grenzdrehmoment, ab dem eine Relativdrehung zwischen den Stirnverzahnungen 78 stattfinden kann, durch das Drehmoment aus dem Produkt des Massenträgheitsmoments der Schwungmasse 118 und der nach Durchlaufen des Bremsanlegehubes vorhandenen Verzögerung in Bremsendstellung überschritten wird, so dass die Schwungmasse 118 nach Erreichen der Bremsstellung zunächst weiterdrehen kann und im wesentlichen durch die zwischen den Stirnverzahnungen 78 von Tellerrad 76 und Verriegelungsmutter 72 stattfindenden Reibung langsam zum Stillstand gebracht wird. Hierdurch kann ein allmählicher Abbau der in der Schwungmasse 118 gespeicherten Rotationsenergie stattfinden.

Falls die Stromversorgung des Bremsaktuators 1 und/oder die Steuer- und Regeleinrichtung und eine übergeordnete Fahrzeugsteuerung bei einer Betriebsbremsung ausfallen, werden die Magnetspulen 112, 112' der Verriegelungsvorichtung 90 nicht mehr bestromt, so dass die Druckfedern 110 den Ring 104 in Richtung Schwungscheibe 98 zurückziehen und damit die Magnetzahnbremse 116 lösen. Die daran anschließenden Ereignisse sind identisch mit den zuvor anläßlich einer Feststell- oder Parkbremsung beschriebenen, so dass auch für den Fall einer Not- oder Sicherheitsbremsung sich die Gesamtbremskraft aus einer Summe der Federkräfte der beiden parallel wirkenden Speicherfedern 10, 12 ergibt.

Das Lösen der Bremse ausgehend von der Feststellbrems- oder Notbremsstellung erfolgt in zwei Schritten, wobei zunächst die innere Speicherfeder 10 gespannt wird. Die Permanentmagnetbremse 34 wird von der Steuer- und Regeleinrichtung bestromt und damit geöffnet und der SR-Motor 24 wird in Bremszuspannrichtung angetrieben. Dabei stützt sich die drehende Bremsspindel 48 an der Mutter 66 der Mutter/Spindelbaueinheit 64 ab und bewegt sich zusammen mit der inneren Schiebehülse 20 in Richtung auf die Lösestellung zu. Dabei rotiert die Verriegelungsmutter 72 auf der inneren Schiebehülse 20 bei geöffneter Verriegelungsvorrichtung 90. Bei Erreichen des gespannten Zustands der inneren Speicherfeder 10, welche dem Zustand in der Lösestellung entspricht, wird der SR-Motor 24 durch die Steuer- und Regeleinrichtung gestoppt und die Verriegelungsvorichtung 90 durch Bestromen der Magnetspulen 112, 112' in Verriegelungsstellung gebracht. Aber auch bei schon bestromten Magnetspulen 112, 112' und damit geschlossener Verriegelungsvorrichtung 90 ist das Spannen der inneren Speicherfeder 10 möglich.

In einem weiteren Schritt wird die äußere Speicherfeder 12 gespannt, indem der SR-Motor 24 in Gegendrehrichtung, d.h. in Löserichtung betrieben wird, wobei sich die Bremsspindel 48 an der verriegelten inneren Schiebehülse 20 abstützt durch ihre Drehung die Mutter 66 der Mutter/Spindelbaueinheit 64 zusammen mit der äußeren Schiebehülse 16 in Richtung auf die Lösestellung zu schraubt. Anschließend wird der SR-Motor 24 abgeschaltet und die Permanentmagnetbremse 34 aktiviert.

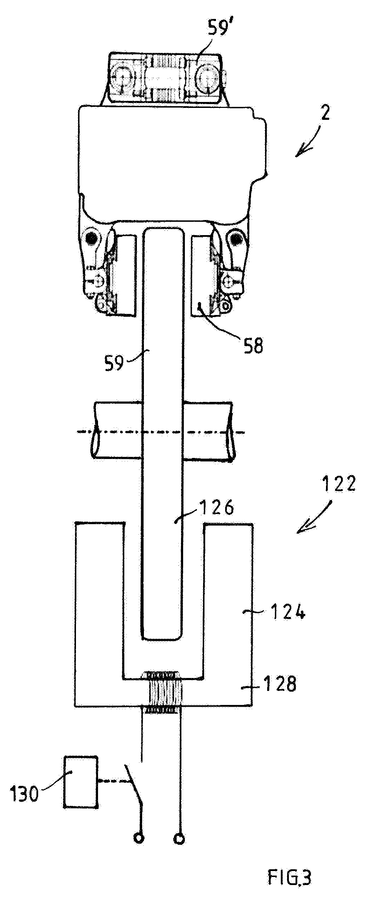

Wie Fig.3 zeigt, ist die Reibungsscheibenbremse von Fig.1 und Fig.2 mit einer Wirbelstrombremse 122 kombiniert, welche mit einen drehfesten Stator 124 und einen rotierenden Rotor 59 umfasst, wobei beispielsweise der Rotor 59 eine Wirbelstrombahn 126 und der Stator 124 eine Magnetanordnung 128 trägt, deren magnetische Feldlinien bei relativer Bewegung des Rotors 59 gegenüber dem Stator 124 in der Wirbelstrombahn 126 Wirbelströme induzieren, um ein Bremsmoment zu erzeugen.

Dabei wird der Rotor der Wirbelstrombremse 122 durch die Bremsscheibe 59 der Reibungsscheibenbremse 2 gebildet. Besonders bevorzugt beinhaltet die Magnetanordnung 128 einen Elektromagneten, der bei deren Erregung in bekannter Weise ein Magnetfeld erzeugt, dessen magnetische Feldlinien bei relativer Bewegung der Bremsscheibe 59 als Rotor gegenüber dem Elektromagneten 128 als Stator in der an oder in der Bremsscheibe 59 ausgebildeten Wirbelstrombahn 126 Wirbelströme induzieren. Der durch das elektrische Bordnetz des Schienenfahrzeugs stromversorgte Elektromagnet 128 wird von einer Steuereinheit 130 in Abhängigkeit von Betriebsparametern des Schienenfahrzeugs angesteuert, wobei die Betriebsparameter des Schienenfahrzeugs die jeweilige Bremsanforderung und/oder die Geschwindigkeit des Schienenfahrzeugs beinhalten. Diese Steuereinheit 130 ist in eine hier nicht explizit gezeigte Bremssteuereinheit integriert, welche auch die Steuerung der Reibungsscheibenbremse 2 umfasst.

Wird eine Stromversorgung des Elektromagneten 128 durch Steuerung der Steuereinheit 130 aktiviert, so werden der Drehrichtung der Bremsscheibe 59 in bekannter Weise gegenläufige Wirbelströme in der Wirbelstrombahn 126 der Bremsscheibe 59 induziert, wodurch ein Bremsmoment auf die Bremsscheibe 59 erzeugt wird. Die Wirbelstrombahn 126 ist dann der ferromagnetische Teil der Bremsscheibe 59, welcher von den Feldlinien des Magnetfelds erfasst wird. Im vorliegenden Fall besteht die Bremsscheibe 59 bevorzugt vollständig aus ferromagnetischem Material, so dass die Wirbelstrombahn 126 annähernd durch die gesamte Bremsscheibe 59 gebildet wird.

Die Reibungsscheibenbremse 2 und die Wirbelstromscheibenbremse 122 als elektrodynamische Bremse sind dann gemeinsam als Baueinheit in einem Drehgestell des Schienenfahrzeugs angeordnet, wobei die gemeinsame Bremsscheibe 59 auf einer drehenden Triebachse 132 des Drehgestells angeordnet ist. Zum Betriebsbremsen können dann beide Bremsen 2, 122 einzeln und/oder kombiniert in beliebiger Weise eingesetzt werden, beispielsweise zeitlich parallel oder zeitlich hintereinander. Alternativ könnte die Bremsscheibe 59 selbstverständlich auch auf einer nicht angetriebenen Achse angeordnet sein. Die Feststellbremse wird dann in oben beschriebener Weise alleine durch die Reibungsscheibenbremse 2 realisiert bzw. ist in dieser integriert.

Die erfindungsgemäße Bremsvorrichtung, welche die Reibungsscheibenbremse 2 und die Wirbelstromscheibenbremse 122 umfasst, ist nicht auf eine Anwendung bei Schienenfahrzeugen beschränkt. Vielmehr kann sie als kombinierte elektrodynamische Bremse/Reibungsscheibenbremse in jeglicher Art von Fahrzeugen eingesetzt werden, beispielsweise für Straßenfahrzeuge oder Nutzfahrzeuge.

### Bezugszeichenliste

- 1: Bremsaktuator
- 2: Reibungsscheibenbremse
- 3: Aktuatorgehäuse
- 4: Deckelabschnitt
- 6: Bohrung
- 7: innere Wandung
- 8: äußere Wandung
- 10: innere Speicherfeder
- 12: äußere Speicherfeder
- 14: Ringkragen
- 16: äußere Schiebehülse
- 18: Ringkragen
- 20: innere Schiebehülse
- 22: axialer Anschlag
- 24: SR-Motor
- 30: Stator
- 32: Rotor
- 34: Haltebremse
- 36: Hohlwelle
- 38: Kugellager
- 40: Keilwellenverzahnung
- 42: Flügel
- 44: Zwischenhülse
- 46: Zapfen
- 48: Bremsspindel
- 50: becherförmiger Abschnitt
- 52: Pleuel
- 53: Exzenterhebel
- 55: Bolzen
- 56: Exzenterwelle
- 57: Zangenhebel
- 57': Zangenhebel
- 58: Bremsbeläge
- 59: Bremsscheibe
- 59': Druckstangensteller
- 60: Mutter
- 61: Rillenkugellager
- 62: Schulter
- 64: Mutter/Spindelbaueinheit
- 66: Mutter
- 68: Ansatz
- 70: Ringraum
- 72: Verriegelungsmutter
- 74: Rutschkupplung
- 76: Tellerrad
- 78: Stirnverzahnungen
- 80: Sprengring
- 82: Tellerfederpaket
- 84: Rillenkugellager
- 86: Axialnadellager
- 88: Gewinde
- 90: Verriegelungsvorrichtung
- 92: Gehäuse
- 94: Welle
- 96: Kegelrad
- 98: Schwungscheibe
- 100: Rillenkugellager
- 102: Ringausnehmung
- 104: Ring
- 106: Zapfen
- 108: Zahnkranz
- 108': Zahnkranz
- 110: Druckfedern
- 112: Magnetspule
- 112': Magnetspule
- 114: elektr. Anschluß
- 116: Magnetzahnbremse
- 118: Rotationsschwungmasse
- 120: Bremskraftumsetzer
- 122: Wirbelstromscheibenbremse
- 124: Stator
- 126: Wirbelstrombahn
- 128: Magnetanordnung
- 130: Steuereinheit

## Patentansprüche

1. Bremsvorrichtung eines Fahrzeugs beinhaltend:
a) eine Wirbelstromscheibenbremse (122) mit einem drehfesten Stator (124) und einem rotierenden Rotor (59), wobei der Rotor (59) oder der Stator (124) eine Wirbelstrombahn (126) und der Stator (124) oder der Rotor (59) eine Magnetanordnung (128) trägt, deren magnetische Feldlinien bei relativer Bewegung des Rotors (59) gegenüber dem Stator (124) in der Wirbelstrombahn (126) Wirbelströme zur Erzeugung eines Bremsmoments induzieren,
b) eine Reibungsscheibenbremse (2) mit wenigstens einer Bremsscheibe (59) und mit mit dieser Bremsscheibe (59) zusammen wirkenden Bremsbelägen (58), zur Erzeugung eines Bremsreibmoments zwischen der Bremsscheibe (59) und den Bremsbelägen (58), wobei
c) der Rotor (59) der Wirbelstromscheibenbremse (122) durch die Bremsscheibe (59) der Reibungsscheibenbremse (2) gebildet wird, und wobei
d) die Magnetanordnung (128) wenigstens einen Elektromagneten beinhaltet, welcher von einer Steuereinheit (130) in Abhängigkeit von Betriebsparametern des Fahrzeugs angesteuert ist,
**dadurch gekennzeichnet, dass**
e) die Betriebsparameter des Fahrzeugs die jeweilige Bremsanforderung und die Geschwindigkeit des Fahrzeugs beinhalten.

2. Bremsvorrichtung nach Anspruch 1, **dadurch gekennzeichnet, dass** die Steuereinheit (130) in eine Bremssteuereinheit integriert ist, welche auch die Steuerung der Reibungsscheibenbremse (2) umfasst.

3. Bremsvorrichtung nach einem der vorhergehenden Ansprüche, **dadurch gekennzeichnet, dass** der Stator (124) die Magnetanordnung (128) und die Bremsscheibe (59) die Wirbelstrombahn (126) trägt.

4. Bremsvorrichtung nach einem der vorhergehenden Ansprüche, **dadurch gekennzeichnet, dass** auf die Reibungsscheibenbremse (2) eine kombinierte Betriebs- und Feststellbremse umfasst, wobei ein Bremsaktuator (1) der Betriebsbremse der Reibungsscheibenbremse (2) mit einem Bremsaktuator (10, 12) der Feststellbremse der Reibungsscheibenbremse (2) in einer Baueinheit zusammengefasst ist.

5. Bremsvorrichtung nach Anspruch 4, **dadurch gekennzeichnet, dass** der Bremsaktuator (1) der Betriebsbremse der Reibungsscheibenbremse (2) elektrisch und/oder pneumatisch betätigbar ist und dass der Bremsaktuator (10, 12) der Feststellbremse der Reibungsscheibenbremse (2) einen die Zuspannkraft abgebenden Federspeicher beinhaltet.

6. Bremsvorrichtung nach Anspruch 5, **dadurch gekennzeichnet, dass** der Bremsaktuator (1) der Betriebsbremse der Reibungsscheibenbremse (2) und der Bremsaktuator (10, 12) der Feststellbremse der Reibungsscheibenbremse (2) auf eine gemeinsame Bremszange mit Zangenhebeln (57, 57') wirken, welche endseitig die Bremsbeläge (58) der Reibungsscheibenbremse (2) trägt.

7. Schienenfahrzeug beinhaltend eine Bremsvorrichtung nach einem der vorhergehenden Ansprüche.

## Claims

1. Brake device of a vehicle, containing:
a) an eddy current disc brake (122) having a rotationally fixed stator (124) and a rotating rotor (59), wherein the rotor (59) or the stator (124) carries an eddy current path (126) and the stator (124) or the rotor (59) carries a magnet arrangement (128), the magnetic field lines of which induce eddy currents in the eddy current path (126) during relative movement of the rotor (59) with respect to the stator (124) in order to generate a braking torque,
b) a friction disc brake (2) having at least one brake disc (59) and brake pads (58) interacting with said brake disc (59) in order to generate a braking friction torque between the brake disc (59) and the brake pads (58), wherein
c) the rotor (59) of the eddy current disc brake (122) is formed by the brake disc (59) of the friction disc brake (2), and wherein
d) the magnet arrangement (128) contains at least one electromagnet which is activated by a control unit (130) in accordance with operating parameters of the vehicle,
**characterized in that**
e) the operating parameters of the vehicle include the respective braking request and the speed of the vehicle.

2. Brake device according to Claim 1, **characterized in that** the control unit (130) is integrated into a brake control unit, which also includes the control of the friction disc brake (2).

3. Brake device according to one of the preceding claims, **characterized in that** the stator (124) carries the magnet arrangement (128) and the brake disc (59) carries the eddy current path (126).

4. Brake device according to one of the preceding claims, **characterized in that** the friction disc brake (2) comprises a combined service and immobilization brake, wherein a brake actuator (1) of the service brake of the friction disc brake (2) is combined in a single unit with a brake actuator (10, 12) of the immobilization brake of the friction disc brake (2).

5. Brake device according to Claim 4, **characterized in that** the brake actuator (1) of the service brake of the friction disc brake (2) can be actuated electrically and/or pneumatically and **in that** the brake actuator (10, 12) of the immobilization brake of the friction disc brake (2) contains a spring accumulator that outputs the application force.

6. Brake device according to Claim 5, **characterized in that** the brake actuator (1) of the service brake of the friction disc brake (2) and the brake actuator (10, 12) of the immobilization brake of the friction disc brake (2) act on a common brake caliper having caliper levers (57, 57') which carries the brake pads (58) of the friction disc brake (2) at the ends.

7. Rail vehicle containing a brake device according to one of the preceding claims.

## Revendications

1. Dispositif de freinage d'un véhicule comportant :
a) un frein (122) à disque à courants de Foucault ayant un stator (124) fixe en rotation et un rotor (59) tournant, le rotor (59) ou le stator (124) portant une piste (126) de courants de Foucault et le stator (124) ou le rotor (59) un agencement (128) d'aimants, dont les lignes de champ magnétique induisent, lorsque le rotor (59) se déplace par rapport au stator (124), dans la piste (126) de courants de Foucault, des courants de Foucault pour produire un couple de freinage.
b) un frein (2) à disque à friction ayant au moins un disque (59) de frein et des garnitures (58) de frein coopérant avec ce disque (59) de frein pour produire un couple de friction de frein entre le disque (59) et les garnitures (58) de frein, dans lequel
c) le rotor (59) du frein (122) à disque à courants de Foucault est formé par le disque (59) de frein du frein (2) à disque à friction et dans lequel
d) l'agencement (128) d'aimants comporte au moins un électroaimant qui est commandé par une unité (130) de commande en fonction de paramètres de fonctionnement du véhicule,
**caractérisé en ce que**
e) les paramètres de fonctionnement du véhicule comportent l'exigence de freinage et la vitesse du véhicule.

2. Dispositif de freinage suivant la revendication 1, **caractérisé en ce que** l'unité (130) de commande est intégrée à une unité de commande de freinage qui comprend aussi la commande du frein (2) à disque à friction.

3. Dispositif de freinage suivant l'une des revendications précédentes, **caractérisé en ce que** le stator (124), l'agencement (128) d'aimants et le disque (59) de frein portent la piste (126) de courants de Foucault.

4. Dispositif de freinage suivant l'une des revendications précédentes, **caractérisé en ce que** le frein (2) à disque a friction comprend un frein combiné de service et de stationnement, un actionneur (1) du frein de service du frein (2) à disque à friction étant rassemblé en une unité de construction avec un actionneur (10, 12) du frein de stationnement du frein (2) à disque à friction.

5. Dispositif de freinage suivant la revendication 4, **caractérisé en ce que** l'actionneur (1) du frein de service du frein (2) à disque à friction peut être actionné électriquement et/ou pneumatiquement et **en ce que** l'actionneur (10, 12) de frein du frein de stationnement du frein (2) à disque à friction comporte un ressort accumulateur donnant une force de serrage.

6. Dispositif de freinage suivant la revendication 5, **caractérisé en ce que** l'actionneur (1) du frein de service du frein (2) à disque à friction et l'actionneur (10, 12) du frein de stationnement du frein (2) à disque à friction agissent sur un étrier de frein commun par des leviers (57, 57') d'étrier qui portent, du côté de l'extrémité, les garnitures (58) du frein (2) à disque à friction.

7. Véhicule ferroviaire comportant un dispositif de freinage suivant l'une des revendications précédentes.
